# EUROPEAN PATENT SPECIFICATION

(11) **EP 2 002 149 B1**
(45) Date of publication and mention of the grant of the patent: **02.12.2009**
(21) Application number: 07734134.5
(22) Date of filing: 19.03.2007
(51) Int. Cl.: F16H 25/24

(54) **DEVICE FOR CONVERTING A ROTARY MOTION INTO A LINEAR MOTION**
VORRICHTUNG ZUR UMWANDLUNG EINER DREHBEWEGUNG IN EINE LINEARBEWEGUNG
DISPOSITIF DE CONVERSION D'UN MOUVEMENT ROTATIF EN MOUVEMENT LINÉAIRE

(30) Priority: 24.03.2006 IT VI20060084
(43) Date of publication of application: 17.12.2008
(73) Proprietor: ARES Engineering S.R.L., 36010 Carre' (IT); Brun, Giancarlo, 36016 Thiene VI (IT)
(72) Inventor: BRUN, Giancarlo, 19/A I-36016 Thiene (IT)
(74) Representative: Terreran, Gabrio
(86) International application number: PCT/IB2007/000811
(87) International publication number: WO 2007/110769

(56) References cited:
- EP-A- 1 617 103
- DE-A1- 2 261 736
- DE-A1- 4 002 151
- DE-A1- 10 017 447
- DE-A1- 19 515 093
- GB-A- 2 211 908
- US-A- 3 730 016

## Description

The present invention concerns a device that makes it possible to intervene indirectly on the operation or control of mechanical movements.

In particular, the present invention concerns a device for converting a rotary motion into a linear motion, particularly suited to be used for moving mechanical parts.

More particularly, the present invention concerns a linear actuator where the advance for screw turn differs from the thread pitch, which can be used as an alternative to the actuators of the type currently on the market to set in motion mechanical parts like for example gates or doors. The actuator that is the subject of the invention is also suitable for equipping lifting devices like for example jacks, etc.

Some devices of known type for converting a rotary motion into a linear motion substantially comprise a support element on which a first threaded female element is rotantingly installed, said female element being coupled to a second threaded male element.

The first element is constituted by a nut screw mounted on bearings and free to rotate on a first axis.

The second element is constituted by a screw whose diameter is shorter than the diameter of the nut screw, mounted on bearings, too, which defines a second axis that is parallel to but does not coincide with said first axis.

The actuator device also comprises power means, generally consisting of an electric motor that allows the screw to be set rotating around the second axis.

In practice, the activation of the power means sets the screw rotating and this, according to the direction of rotation and to the rpm, causes a corresponding axial translation along said first axis of the nut screw and the support.

In ideal conditions, the axial translation of the support element, with the same number of screw turns, is a function of the ratio of the diameters of the two elements (screw-nut screw), as well as of the pitch of the corresponding threads.

A known drawback of these devices lies in that the ratio between the number of screw turns and the axial translation of the support is not constant but varies depending on the operating conditions of the device itself.

More precisely, the behaviour of the device depends on the friction force present between the threads of the two coupled elements at the moment of operation of the device, which varies depending on the load conditions.

In fact, when the friction developed between the two coupled threads is below a given value, the nut screw is not set rotating by the screw, as desired, and therefore does not rotate around the first axis. This means that with the same rotation of the screw the axial translation of the support is not a function of the ratio of the two diameters (screw-nut screw) of the device, but corresponds to the pitch of the two coupled threads.

This causes an undesired behaviour of the device, which makes it unsuitable for applications that require uniform behaviour in any operation mode.

More particularly, said undesired behaviour takes place when the device is idle and more precisely when the friction developed between the threads due to the contact of the two elements is not sufficient to overcome the torque generated for example by the friction of the support bearings and/or by the inertia of the elements themselves.

A first drawback posed by the devices of known type is thus constituted by the fact that they do not make it possible to guarantee a uniform linear displacement, proportional to the number of turns imparted to the screw, in any operating condition of the device. More particularly, the above mentioned drawback causes an irregular linear translation speed of the device's support when, for example, the axial load it bears is below a minimum value.

A further drawback lies in that said minimum value is typical of each device and varies over time.

In order to overcome the drawbacks mentioned above, the known art has proposed devices that fix the transmission ratio between screw and nut screw through a gear system or a timing belt system.

Said devices, though solving the problem of maintaining a regular advance motion also in the absence of external loads on the actuator, pose some drawbacks.

More particularly, a first drawback of these devices is constituted by the fact that they are complicated to carry out and require precise mechanical machining operations that considerably affect also the cost of the device itself.

A further drawback is represented by the fact that the synchronisation device increases the noise produced by the device during operation.

According to a further kind of devices of known type, the device comprises an elastic system, called preload system, that pushes the screw against the nut screw, thus guaranteeing minimum friction between the coupled threads.

A first drawback posed by said devices is constituted by the fact that they offer a low level of efficiency, determined by the force exerted on the threads by the elastic element.

A further drawbacks is constituted by the fact that the force generated by the elastic element acts continuously and directly on the coupled threads, thus increasing their wear over time. This causes slacks and mechanical malfunctions, as well as further reducing the efficiency of the device.

A further drawback posed by said devices lies in that they are not reliable and present malfunctions especially when the axial direction in which the support moves corresponds to the force exerted by the load to be moved.

Further examples of devices known in the art may be found in documents DE-A-100 17 447, showing a device with the features of the preamble of claim 1, and EP 1 617 103 A and US 3 730 016 A.

The aim of the present invention is to overcome the drawbacks described above.

In particular, it is a first aim of the invention to construct a device for converting a rotary motion into a linear motion that makes it possible to guarantee a uniform linear displacement, proportional to the number of screw turns and independent of the conditions of use.

More particularly, it is one aim of the invention to construct a device whose linear advance speed is uniform, dependent on the number of turns imparted to the screw and independent of the load applied to the device.

It is a further aim of the invention to carry out a device offering high efficiency in terms of operating torque applied and linear displacement obtained, that is, allowing substantially all the torque applied to the screw to be used to obtain the desired linear displacement.

It is another aim of the invention to carry out a reversible device, that is, a device capable of working when the screw is set rotating with idle nut screw, or when the nut screw is set rotating with idle screw, or when the support element is set rotating and the screw rotation is locked.

It is a further aim of the invention to carry out a device that ensures sufficiently precise and fine control of the linear advance obtained, independently of the load applied.

It is another aim of the invention to obtain a device particularly suitable for making linear actuators for converting a rotary motion into a linear and preferably regular motion, that ensures sufficiently precise positioning, high efficiency and requires a low torque for operation.

It is another aim of the invention to carry out a device featuring noiseless, simple, economic and reliable synchronization between screw and nut screw, with few components and capable of ensuring widening of the actuator's field of application, the advance being regular also in the absence of external loads and therefore of friction between the threads of screw and nut screw at the contact points. Lastly, it is a further aim of the invention to make an intrinsecally reliable and safe device that will last over time.

The aims described above have been achieved through the construction of a device for converting a rotary motion into a linear motion according to the contents of the main claim.

The proposed solution advantageously makes it possible to ensure in a simple and effective way the desired operation of the device in any condition of use, with no need for highly precise mechanical elements.

Furthermore, the proposed solution does not involve action on the coupled threads of the two elements and therefore does not affect their wear and the efficiency of the device itself.

Still advantageously, the solution proposed is easy to carry out, reliable, economic and noiseless.

Advantageous embodiments of the invention are the subject of the dependent claims.

Still advantageously, the solution proposed makes it also possible to make up for imprecise and rough mechanical processing.

The aims and advantages described above will be highlighted in greater detail in the description of some preferred embodiments of the invention, supplied as examples without limitation, with reference to the attached drawings, wherein:
- Figure 1 is a perspective view of a partial cross section of a device for converting a rotary motion into a linear motion that is the subject of the present invention;
- Figure 2 shows a longitudinal section of the device shown in Figure 1;
- Figure 3 is an exploded view of the device shown in Figure 1;
- Figure 4 is a perspective view of some elements of the device shown in Figure 1;
- Figure 5 is a perspective view of some of the elements shown in Figure 4;
- Figure 6 is a perspective view of a partial cross section of another example of embodiment of a device for converting a rotary motion into a linear motion that is the subject of the present invention;
- Figure 7 shows a longitudinal section of the device shown in Figure 6;
- Figure 8 is an exploded view of the device shown in Figure 6;
- Figure 9 is a perspective view of some elements of the device shown in Figure 6;
- Figure 10 is a perspective view of some of the elements shown in Figure 9;

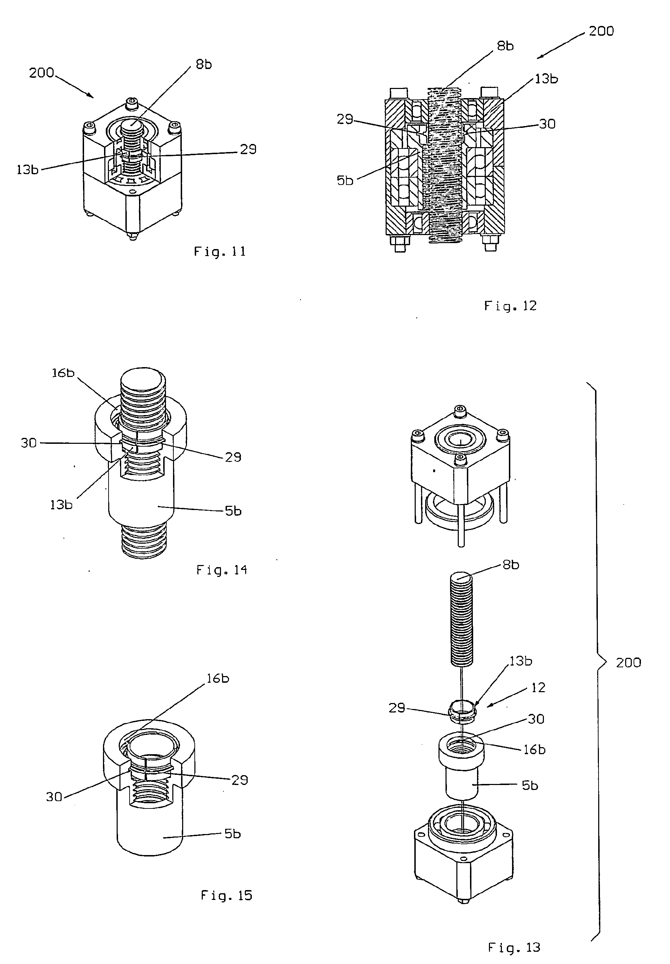

- Figure 11 is a perspective view of a partial cross section of a further example of embodiment of a device for converting a rotary motion into a linear motion that is the subject of the present invention;
- Figure 12 shows a longitudinal section of the device shown in Figure 11;
- Figure 13 is an exploded view of the device shown in Figure 11;
- Figure 14 is a perspective view of some elements of the device shown in Figure 11;
- Figure 15 is a perspective view of some of the elements shown in Figure 14;

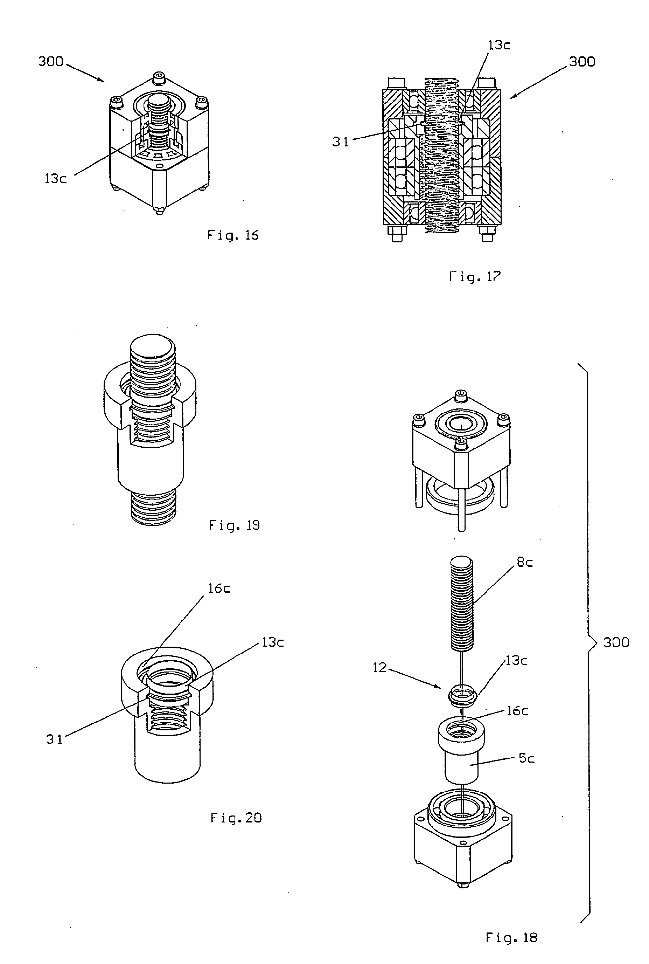

- Figure 16 is a perspective view of a partial cross section of another example of embodiment of a device for converting a rotary motion into a linear motion that is the subject of the present invention;
- Figure 17 shows a longitudinal section of the device shown in Figure 16;
- Figure 18 is an exploded view of the device shown in Figure 16;
- Figure 19 is a perspective view of some elements of the device shown in Figure 16;
- Figure 20 is a perspective view of some of the elements shown in Figure 19;

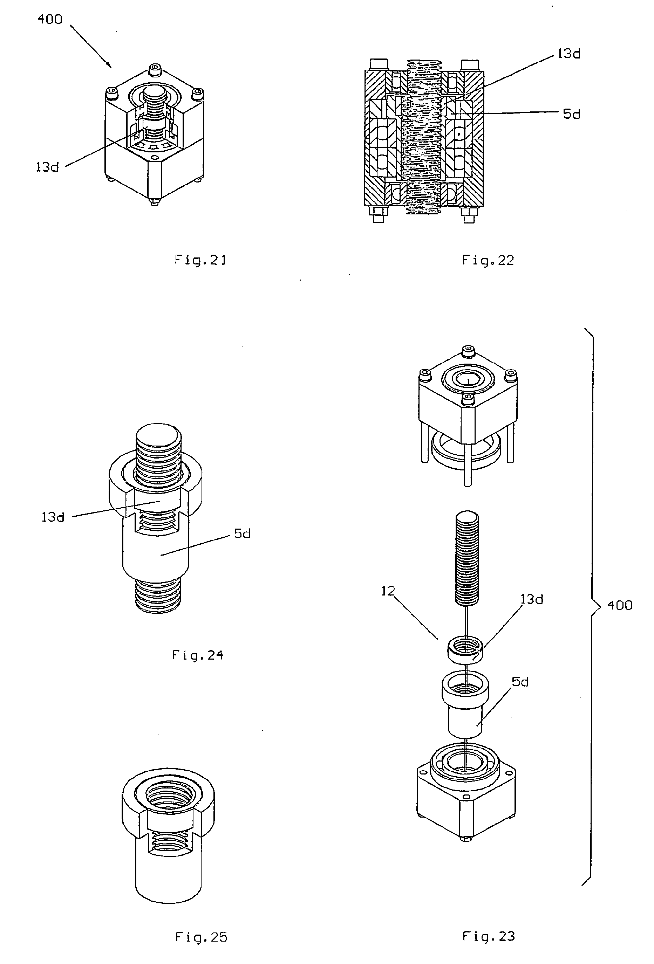

- Figure 21 is a perspective view of a partial cross section of a further example of embodiment of a device for converting a rotary motion into a linear motion that is the subj ect of the present invention;
- Figure 22 shows a longitudinal section of the device shown in Figure 21;
- Figure 23 is an exploded view of the device shown in Figure 21;
- Figure 24 is a perspective view of some elements of the device shown in Figure 21;
- Figure 25 is a perspective view of some of the elements shown in Figure 24;

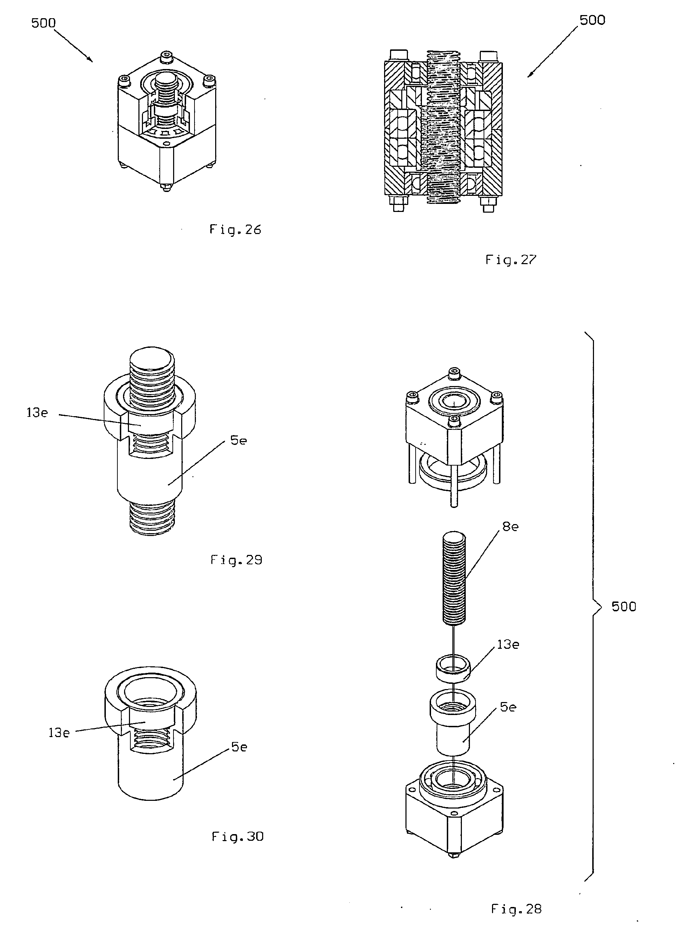

- Figure 26 is a perspective view of a partial cross section of another example of embodiment of a device for converting a rotary motion into a linear motion that is the subject of the present invention;
- Figure 27 shows a longitudinal section of the device shown in Figure 26;
- Figure 28 is an exploded view of the device shown in Figure 26;
- Figure 29 is a perspective view of some elements of the device shown in Figure 26;
- Figure 30 is a perspective view of some of the elements shown in Figure 29;
- Figure 31 is a perspective view of a partial cross section of another example of embodiment of a device for converting a rotary motion into a linear motion that is the subject of the present invention;
- Figure 32 is an exploded view of the device shown in Figure 31;
- Figure 33 is a perspective view of some elements of the device shown in Figure 31;
- Figure 34 is a perspective view of some of the elements shown in Figure 33;
- Figure 35 shows a longitudinal section of a further preferred embodiment of a device carried out according to the invention.

First of all it is important to point out that identical or similar components in different examples of embodiments are indicated by the same reference numbers. The position indications given in the different examples of embodiment should be transferred to the new position.

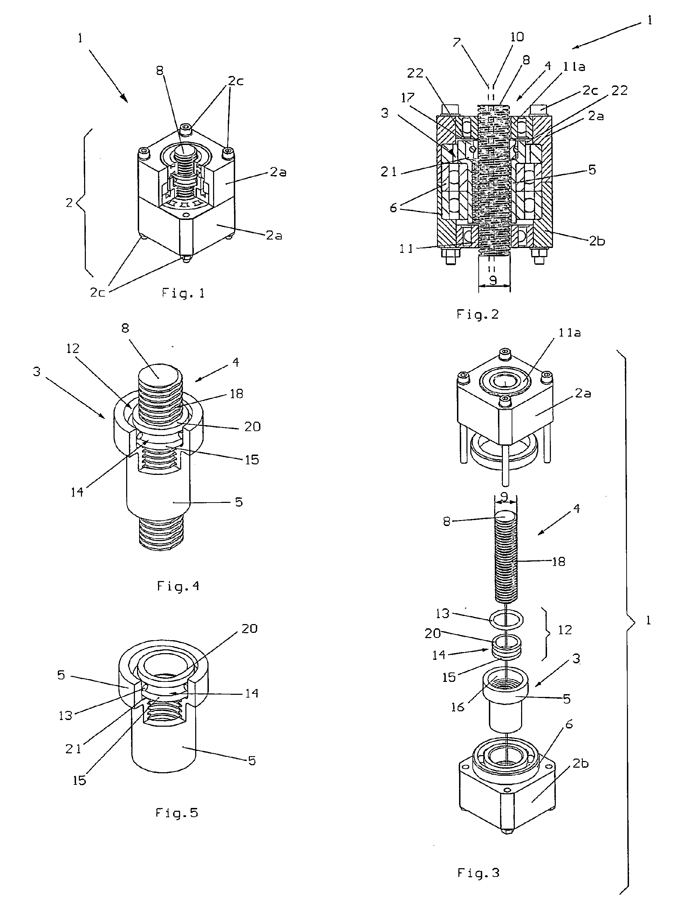

A practical embodiment of a device for converting a rotary motion into a linear motion, subject of the present invention, is shown in Figure 1, where it is indicated as a whole by 1.

It comprises a support element 2 on which a first threaded female element 3, visible in particular in Figures 2 to 5, is rotatingly installed, said female element being coupled to a second threaded male element 4.

The support element 2 comprises two parts 2a and 2b visible in Figure 2 and joined by screws indicated by 2c.

The first element 3 is constituted by a nut screw 5 mounted on ball bearings 6 integral with the support 2, said nut screw being free to rotate on a first axis 7.

The second element 4 comprises a screw 8 whose thread diameter 9 is shorter that the thread diameter of the hole of the nut screw 5. The screw 8 defines a second axis 10 parallel to but not coinciding with the above mentioned first axis 7 and is guided in its axial stroke by two guide bearings 11, 11a provided with a hole that substantially corresponds to the nominal diameter of the screw 8. In this way the screw 8 fits in the hole with a minimum slack, sufficient to allow it to rotate freely and also to slide axially. The screw 8 and the nut screw 5 are arranged eccentrically with respect to each other and maintained in said position inside the support 2 by the respective bearings, so that the threads of the screw 8 and of the nut screw 5 come into contact with each other though presenting a minimum slack, indicatively included between 0.001 and 0.3 mm, depending on the precision and size of the device. According to the invention, the device 1 also comprises means 12 arranged between the first threaded element 3 and the second threaded element 4, suited to transmit the rotary motion imparted to one of the two threaded elements 3, 4 to the other by friction.

This makes it possible to guarantee the rotation of the coupled elements 3, 4 on the thread even when the device 1 is idle, preventing any irregularity in the advance of the actuator and setting the advance per screw turn to a given value, a function of the ratio between the diameters of the screw 8 and the nut screw 5, as well as of the thread pitch of the same.

This solution guarantees that the nut screw 5 is always set rotating by the screw 8, or vice versa, also independently of the loads and the friction present in the system.

This advantageously makes it possible to guarantee a motion that is always smooth and without abrupt relative axial accelerations between screw 8 and nut screw 5 and thus between screw 8 and support 2.

In the particular embodiment of the invention illustrated in Figures from 1 to 5, said means 12 comprise an annular elastic element 13 housed in an annular seat 14 obtained in an annular support 15 mounted on the screw 8.

More precisely, the annular element 13 is mounted on the outside of the support 15 and is integral with it owing to the elastic properties of the element 13 itself.

The elastic element 13 is suited to cooperate by friction with at least one portion of a surface integral with the first element 5, comprising, in the preferred embodiment of the invention described herein, a cylindrical surface 16 obtained in the nut screw 5.

In particular, the elastic element 13 is enclosed in a seat 17 and exerts pressure against the properly shaped and unthreaded wall 16 of the nut screw 8, transmitting any relative rotation of one element 3 to the other element 4 and vice versa by friction.

As regards the support 15, it is coupled to the screw 8 in such a way as to allow it to slide axially along the axis 10 and prevent it from rotating with respect to the same axis.

More particularly, the coupling between the support 15 and the screw 8 is obtained by providing a facet 18 on the screw 8 or flattening the crest of the thread that cooperates with a portion of a plane counteracting surface 20 of the support element 15 that prevents mutual rotation between the screw 8 and the support element 15, thus allowing axial sliding.

As already explained, the support element 15 is housed in a seat 17 defined by a first counteracting surface 21 axially integral with the support element 2, constituted, in the example, by a shoulder of the nut screw 5, and by a second counteracting surface 22 that is also axially integral with the support element 2 and belongs, in the example illustrated, to the inner ring of the upper guide bearing 11a.

The shoulder 21 and the second counteracting surface 22 act on the support element 15 moving it axially when the device 1 is activated, as will be better described below.

Alternatively, the counteracting surfaces 21 and 22 may be both obtained in the nut screw 5 or the support 2, and may be preferably rotating together with the nut screw 5 or the screw 8 to limit energy losses due to sliding friction at the same time maintaining high efficiency.

It should also be noted that the groove of the thread of the screw 8 is sufficiently deep to ensure that the above mentioned facet does not affect the bearing part of the thread.

It is clear that the annular element 13 may be made of any material resistant to wear that guarantees the transmission of motion by friction. Preferably, it is constituted by a rubber elastic ring, for example an O ring.

It is also clear that, in other embodiments, the system for preventing mutual rotation comprising the plane counteracting surface 20 and the facet 18 can be replaced by analogous means, all suited to prevent any relative rotation between the screw 8 and the support 15 and constituted, for example, by tab or tooth systems. In particular, the plane counteracting surface 20 can be replaced by any other element projecting from the inner cylindrical wall of the annular support 15, capable of counteracting any mutual rotation when it comes into contact with the facet 18.

It should also be observed that the support element 15 is coaxial with the screw 8 and therefore the elastic element 13 is transversally in contact with the nut screw only in a small area.

A further preferred embodiment of the invention indicated as a whole by 100 is shown in Figures from 6 to 10.

This embodiment is differentiated from the previous one due to the fact that the means 12 comprise a support element 15a constituted by a substantially anular open element.

More precisely, in this embodiment the screw 8 is inserted in a ring 15a having an opening 27 whose inner walls define a hole whose diameter is slightly shorter than the diameter of the screw 8a that in this case has no flattening and/or facets on the thread crest. Advantageously with this solution the ring 15a, once inserted in the screw 8a, adapts to the diameter of the screw 8a and exerts on it, through its inner wall, a pressure that though being within the limits of the friction force between the surfaces, makes the ring integral with the screw 8a itself, guaranteeing at the same time its axial sliding in a way analogous to that proposed in the solution previously described.

It should also be observed that the ring 15a advantageously has one or more parts or sectors 28 with reduced thickness.

Said areas with reduced thickness define regions of preferential yield that make it possible to increase the capacity of the ring 15a to adapt to the diameter of the screw 8a and thus ensure better adhesion of the element 15a itself to the screw 8a. This reduced thickness can be obtained, for example, with one or more cuts made on the metal ring.

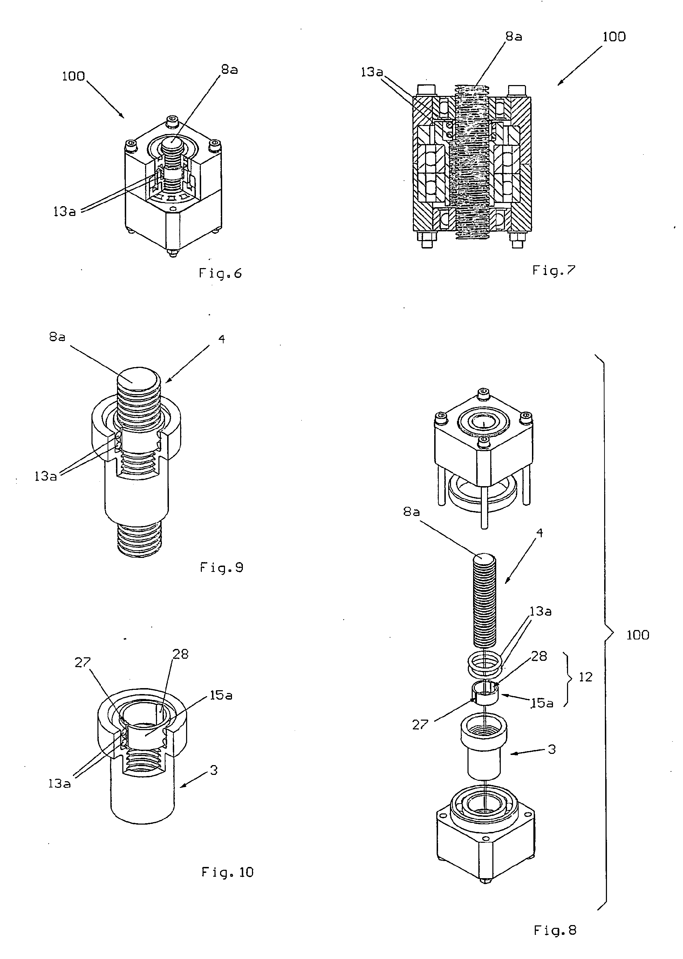

It should also be noted that in this embodiment outside the support element 15a there are several elastic rubber elements 13a, also called O rings, of the type described above. Said elastic elements 13a, once inserted in the metal ring and successively in the actuator, as shown in the exploded view of Figure 8, exert a pressure against the properly shaped and unthreaded wall of the nut screw, thus generating the friction necessary to transmit rotation of the screw to the nut screw and vice versa, even when the device is idle.

It should also be observed that the elastic rings (O rings) facilitate adhesion of the inner surfaces of the support element to the screw, thus helping prevent relative rotation between the screw and the ring.

It should also be noted that any slight relative rubbing between the O ring and the nut screw does not affect the duration of the O ring or the efficiency of the actuator.

The pressure between the ring 15a and the screw 8a is such as to generate a sufficient torque for the transmission of rotation between screw 8a and nut screw 5 with no load, but not to prevent axial sliding of the screw 8a on the ring 15a. The energy lost due to friction during the axial sliding of the screw 8a in the ring 15a is practically irrelevant for the purposes of efficiency.

It is clear that also in this case the annular element may be made of any material resistant to wear that guarantees transmission of motion by friction.

A further preferred embodiment of the invention indicated as whole by 600 is shown in Figures from 31 to 34.

This embodiment is differentiated from the previous one due to the fact that the support element 15f comprises several distinct elements 40, 41, each being a part of a sector of a circle, which when properly positioned side by side allow the surface of the screw 8f to be substantially encircled.

A further preferred embodiment of the invention indicated as whole by 200 is shown in Figures from 11 to 15. This embodiment is differentiated from the previous one due to the fact that the means 12 comprise a substantially annular element 13b defining a hole whose diameter is slightly shorter than the diameter of the screw 8b.

The element 13b is thus maintained integral with the screw 8b owing to the friction generated by the pressure between the contacting surfaces of the ring 13b and the screw 8b. This force, due to the above mentioned difference in size between the diameter of the hole defined by the element 13b and the diameter of the screw 8b is such as to allow the support element to slide axially, though preventing its relative rotation within the limits of the torque to be transmitted.

It should also be observed that the element 13b in this case has at least one annular projection 29, in the example divided into sectors of a circle, suited to be coupled to a corresponding groove 30 obtained on the surface 16b of the nut screw 5b.

A further preferred embodiment of the invention indicated as a whole by 300 is shown in Figures from 16 to 20.

This embodiment is differentiated from the previous one due to the fact that the means 12 comprise an element 13c constituted by a small piece of sheet integral with the screw 8c and suited to deform and adapt to the shape of a wedge-shaped annular recess 31c obtained in one surface 16c of the nut screw 5c.

In this case, the small piece of sheet 13c bends its cylindrical walls in contact with the screw 8c, generating pressure against the screw 8c itself and consequently sufficient friction to transmit motion.

A further preferred embodiment of the invention indicated as a whole by 400 is shown in Figures from 21 to 25.

This embodiment is differentiated from the previous one due to the fact that the means 12 comprise an annular element 13d preferably made of rubber or another elastic material and made integral with the nut screw 5d using a bonding agent.

A further preferred embodiment of the invention indicated as whole by 500 is shown in Figures from 26 to 30.

This embodiment is differentiated from the previous one due to the fact that the annular element 13e integral with the nut screw 5e is threaded inside, in such a way as to increase the friction force generated by contact with the screw 8e.

It should be observed also that in this solution the threading diameter of the element 13e is shorter than the diameter of the screw 8e.

This is due to the fact that the ring 13e is made of a compressible material and is arranged in such a way as to be slightly pressed against the screw 8e.

In this regard it must be pointed out that the threading of the element 13e does not have the function to move the screw 8e axially with respect to the nut screw 5e.

In fact, this function is performed by the threading present on the nut screw 5e that is coupled with the corresponding thread of the screw 8e.

A further preferred embodiment of the invention not represented herein is differentiated from the previous one due to the fact that the means 12 comprise an annular element co-moulded or vulcanised on the first element 3 that performs the functions of the annular element 13.

More precisely, the co-moulded or vulcanised element has a substantially cylindrical surface that defines a hole suitable for receiving the second element 4, through which the same can slide axially.

The cylindrical surface thus faces the second element 4, which may comprise one of the screws previously described, and is suited to counteract at least one portion of it to obtain the movement described above.

A further preferred embodiment not represented herein is differentiated from the previous one due to the fact that the device also comprises means suited to adjust the friction force developed by the means 12.

According to a preferred embodiment of the invention, said adjusting means comprise a pin that is inserted between the support element and the screw, which slightly increases the diameter of the support element itself and therefore of the seat that houses the O ring.

As regards the annular element, in the preferred embodiment it comprises an O ring made of synthetic material.

The actuator device also comprises power means, not represented in the attached drawings, generally consisting of an electric motor that allows the first threaded element 3 or the second threaded element 4 to be set rotating around its own axis, thus moving the support 2 axially.

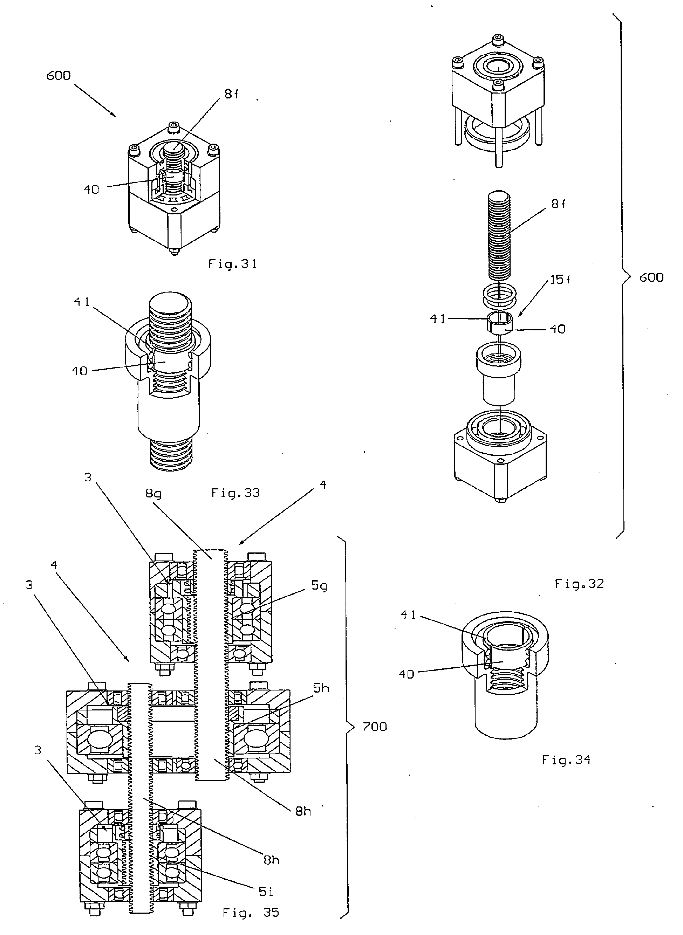

A further preferred embodiment of the invention indicated as a whole by 700 is shown in Figure 35.

This embodiment is differentiated from the previous one due to the fact that the device comprises several threaded elements.

More precisely, in the embodiment shown, the device comprises three first threaded elements 3 and second threaded elements 4.

In particular, the first three threaded elements 3 comprise three nut screws 5g, 5h and 5i with different diameters, while the two second threaded elements 4 comprise two screws 8g and 8h having different diameters, too.

It is clear that in other embodiments the device may comprise a different number of first and second threaded elements 3, 4.

As regards the threads mentioned above, it is clear that they may have one or more starts, and that the direction of the threading of the coupled elements 3, 4 may be the same or not, depending on the required advance pitch.

It should also be observed that the efficiency of the device increases, reducing to a minimum the lever arm of the friction forces generated between the coupled threads of screw and nut screw.

This advantageous increase in efficiency is obtained by increasing the difference in inclination between the coupling threads of the two elements 3 and 4.

It should also be noted that the efficiency of the device increases as the ratio of the diameters of the two coupled elements 3 and 4 increases, and their ratio is preferably included between 0.3 and 0.9.

It is important to observe also that in order to prevent the load from resting on the crests of the coupled threads of the two elements with consequent wear and possible damage to the same, both the female and male threads preferably feature crests with rounded edges.

It should also be noted that to obtain sufficient support from the guide bearings of the screw, the crest of the thread of the second threaded element should be preferably constituted by a cylindrical surface.

It should also be noted that the actual profile of the thread section in the area of contact between the two elements, constituted by the sides of the thread, must preferably be such as to generate, with device under load, an approximately circular contact area. This in order to obtain the minimum lever arm of the friction force compared to the relative rotation centre.

Still to advantage, in order to obtain the best possible distribution of the load between the coupled threads of the two elements 3, 4, it is preferable for the profile of the tooth to be the profile that generates a contact of the ball-ball type. Advantageously, the proposed threading combined with the absence of internal preloads and with surface hardening make it possible to obtain the maximum efficiency of the device.

To further increase the reliability and duration of the device, according to some embodiments of the invention the two elements 3 and 4 are subjected to surface hardening treatments like for example nitriding, case hardening, quenching, etc.

Obviously, in each one of the embodiments described herein the rotation command can be given, as already said, to the first element 3 or the second element 4 or even to the support element 2 with locked rotation of the element 4, and the axial displacement can be performed by the second threaded element or by the unit comprising the first threaded element and the support.

It is also important to note that the diameter of the hole of the above mentioned annular element and/or the external diameter of the same element can be of any size, provided that it is such as to interfere with at least one of the threaded elements 3, 4.

The operation of the device for converting a rotary motion into a linear motion that is the subject of the present invention is described below with reference to the preferred embodiment of the invention illustrated in the Figures from 1 to 5, since there are no substantial differences compared to the other embodiments described.

In practice, even when the device 1 is idling, the activation of the power means not represented herein sets rotating the screw 8, for example, and this sets rotating also the support element 15 and therefore the annular element 13.

This annular element 13 sets rotating, by friction, also the nut screw 5 that starts rotating.

The tangential speeds in the points of contact between screw and nut screw are the same and therefore, due to the difference in diameter between the screw 8 and the nut screw 5, the two elements rotate at different angular speeds that, as already known, are a function of the ratio of the above mentioned diameters.

The relative rotation between screw 8 and nut screw 5 determines a mutual axial displacement between screw and nut screw, whose direction depends on the direction of rotation imparted in this case to the screw 8.

In greater detail, the axial translation of the support element 2 along the first axis, with the same number of screw turns, is a function of the ratio of the diameters of the two elements (screw-nut screw), as well as of the pitch of the corresponding threads.

By inverting the direction of rotation of the screw, the nut screw is set rotating substantially as described above and moves axially in the opposite direction.

In this way, thanks to the presence of the means 12, a sufficiently precise advance pitch is guaranteed, without irregularities and abrupt movements, independently of the external load and substantially without affecting the efficiency of the mechanism.

In greater detail, it should be noted that when the device 1 is not under load and the power means are operated, the transmission ratio is equal to the ratio between the average diameter of the element 13 and the diameter of the cylindrical contact surface 16.

When the device 1 is under load and the power means are operated, the transmission ratio is equal to the ratio between the average diameter of the screw 8 and the average diameter of the nut screw 5.

This means that if the two transmission ratios mentioned above are slightly different, this may result, with the same rotation speed of the screw, in different axial displacements between the screw 8 and the nut screw 5.

This difference in the axial displacement is however negligible.

This also makes the device insensitive to any imprecision in the size of the elements and in their coupling, which may be due for example to non-optimal mechanical machining. It is important to note that in some of the embodiments described this is facilitated by the elastic characteristics of the element 13.

This makes it possible to construct a particularly economic device, simple to carry out and suitable for many applications.

The above description clearly shows that the solution proposed allows the drawbacks described to be eliminated.

In particular, the proposed solution makes it possible to obtain an actuator device for converting a rotary motion into a substantially uniform linear motion in any load condition, with precise positioning, high efficiency and low torque required for operation.

Still advantageously, the proposed device allows linear advances to be carried out with speeds that are independent of the load and friction conditions.

Still advantageously, the proposed device allows the load that can be supported by the device to be increased even if the diameter of the screw and the nut screw remains the same as in the devices of known type, since there is no preload.

Still advantageously, the proposed device has a simple construction that means high reliability and low costs.

Still advantageously, the use of an O ring made of plastic material makes it possible to construct a device that is more silent than the known, devices equipped with gear synchronization means.

Still advantageously, the proposed solution allows linear advances to be carried out at speeds that vary according to the rotation speed of the screw or nut screw, independently of the load and friction conditions.

Finally, it is important to note that advantageously the solution proposed does not require precise mechanical machining to guarantee smooth operation of the device.

Even though the invention has been described mating reference to the attached drawings, it has to be understood that the present invention is not limited to the embodiments depicted in the drawings; and that the scope of the present invention is defined by the appended claims.

It is also important to remember that when the details mentioned in the claims below are followed by references, these must be understood as meant to improve the comprehensibility of the claim in question and not as a limit to the interpretation of the same.

## Claims

1. Device (1, 100, 200, 300, 400, 500, 600, 700) for converting a rotary motion into a linear motion, comprising at least a first threaded element (3) that defines a first axis (7), said first threaded element (3) being coupled with at least one second threaded element (4) defining a second axis (10), said axes (7, 10) being parallel to each other but not coinciding with each other, said device (1) also comprising means (12) arranged between said at least one first threaded element (3) and said at least one second threaded element (4), suited to transmit a rotary movement imparted to one of said elements (3, 4) to the other by friction, **characterized in that** said means (12) comprise at least one annular element (13) housed in an annular seat (14) obtained on an annular support (15) mounted on said at least one second threaded element (4).

2. Device according to claim 1), **characterized in that** said at least one annular element (13) is made of an elastic material.

3. Device according to claim 1) or 2), **characterized in that** said at least one annular element (13) is mounted on the outside of said at least one annular support (15).

4. Device according to claim 3), **characterized in that** said at least one annular support is coupled to said at least one second threaded element.

5. Device according to claim 4), **characterized in that** said at least one annular support element (15) is coupled to said at least one second threaded element (4) in such a way as to allow it to slide axially along said second axis (10) and prevent mutual rotation with respect to the same axis (10).

6. Device according to claim 5), **characterized in that** the mutual rotation between said support element (15) and said at least one second threaded element (4) is prevented by means comprising at least one facet (18) or flattening of the thread of said at least one second threaded element (4) that cooperates with a portion of a counteracting surface (20) of said support element (15).

7. Device according to claim 5), **characterized in that** the mutual rotation between said support element (15) and said at least one second threaded element (4) is prevented by means comprising tab or tooth systems or by elastic means.

8. Device according to any of the claims from 1) to 7), **characterized in that** said at least one support element (15) is coaxial with said at least one second threaded element (4).

9. Device according to claim 1) or 2), **characterized in that** said at least one annular element (13) is mounted inside said at least one annular support (15).

10. Device according to claim 9), **characterized in that** said at least one annular element (13) is integral with said at least one first threaded element (3).

11. Device according to claim 9) or 10), **characterized in that** said at least one support element (15) is coaxial with said at least one first threaded element ' (3).

12. Device according to any of the claims from 1) to 11), **characterized in that** said at least one annular element (13) is suited to cooperate by friction with at least one portion of a surface (16) integral with said at least one first threaded element (3) or with said at least one second threaded element (4).

13. Device (100) according to any of the claims from 1) to 12), **characterized in that** said at least one annular support element (15a) is open.

14. Device according to any of the claims from 1) to 13), **characterized in that** the diameter of said at least one support element (15) is such as to interfere with said at least one second threaded element (8a).

15. Device according to any of the claims from 1) to 14), **characterized in that** said at least one support element (15) presents one or more preferential yield regions.

16. Device (600) according to any of the claims from 1) to 12), **characterized in that** said support element (15f) comprises several distinct elements (40, 41), each substantially defining one part of a sector of a circle.

17. Device according to any of the claims from 1) to 16), **characterized in that** said annular element (13) is made of a material resistant to wear, preferably comprising an elastic material.

18. Device according to claim 17), **characterized in that** said, at least one annular element (13) comprises an elastic ring preferably consisting of at least one 0 ring.

19. Device (400, 500) according to any of the claims from 1) to 18), **characterized in that** it also comprises means for adjusting the friction force developed by said means (12).

20. Device (400, 500) according to claim 19), **characterized in that** said means for adjusting the friction force developed by said means (12) comprise a pin that is inserted between said at least one annular element (13) and said at least one second threaded element (4) or said at least one first threaded element (3).

21. Device according to any of the previous claims, **characterized in that** said at least one first threaded element (3) is a nut screw (5, 5a, 5b, 5c, 5d, 5e, 5f, 5g, 5h, 5i) and said at least one second threaded element (4) is a screw (8, 8a, 8b, 8c, 8d, 8e, 8f, 8g, 8h).

22. Device according to any of the claims from 1) to 21), **characterized in that** said at least one first threaded element (3) is a screw (8, 8a, 8b, 8c, 8d, 8e, 8f, 8g, 8h) and said at least one second threaded element (4) is a nut screw (5, 5a, 5b, 5c, 5d, 5e, 5f, 5g, 5h, 5i).

23. Device (1, 100, 200, 300, 400, 500, 600, 700) according to any of the previous claims, **characterized in that** it also comprises a support (2) on which said at least one first threaded element (3) and/or said at least one second threaded element (4) is rotatingly installed by means of bearings (11, 11a, 6).

24. Device according to claims 1) and 23), **characterized in that** said support element (15) is housed in a seat (17) defined by a first counteracting surface (21) belonging to at least one of said threaded elements (3, 4) or integral with the inner ring of one of said bearings (11, 11a) and by a second counteracting surface (22) integral with the inner ring of one of said bearings (11, 11a).

25. Device (1, 100, 200, 300, 400, 500, 600, 700) according to any of the previous claims, **characterized in that** the threads of said threaded elements have one or more starts.

26. Device (1, 100, 200, 300, 400, 500, 600, 700) according to any of the previous claims, **characterized in that** the diameters of said threaded elements are different and their ratio is preferably included between 0.3 and 0.9.

27. Device (1, 100, 200, 300, 400, 500, 600, 700) according to any of the previous claims, **characterized in that** it also comprises power means suited to set said at least one first threaded element (3) or said at least one second threaded element (4) rotating in order to determine their mutual relative axial translation.

## Patentansprüche

1. Vorrichtung (1, 100, 200, 300, 400, 500, 600, 700) zum Umwandeln einer Drehbewegung in eine lineare Bewegung, umfassend zumindest ein erstes Gewindeelement (3), das eine erste Achse (7) definiert, wobei das erste Gewindeelement (3) mit zumindest einem zweiten Gewindeelement (4), das eine zweite Achse (10) definiert, gekoppelt ist, wobei die Achsen (7, 10) parallel zueinander, aber nicht deckungsgleich miteinander sind, wobei die Vorrichtung (1) ferner Mittel (12) umfasst, die zwischen dem zumindest einen ersten Gewindeelement (3) und dem zumindest einen zweiten Gewindeelement (4) angeordnet sind und dazu geeignet sind, eine Drehbewegung, die einem der Elemente (3, 4) verliehen wurde, durch Reibung an das andere zu übertragen, **dadurch gekennzeichnet, dass** die Mittel (12) zumindest ein ringförmiges Element (13) umfassen, das in einem ringförmigen Sitz (14) aufgenommen ist, der an einem ringförmigen Träger (15) ausgebildet ist, der am zumindest einen zweiten Gewindeelement (4) angebracht ist.

2. Vorrichtung nach Anspruch 1), **dadurch gekennzeichnet, dass** das zumindest eine ringförmige Element (13) aus einem elastischen Material hergestellt ist.

3. Vorrichtung nach Anspruch 1) oder 2), **dadurch gekennzeichnet, dass** das zumindest eine ringförmige Element (13) an der Außenseite des zumindest einen ringförmigen Trägers (15) angebracht ist.

4. Vorrichtung nach Anspruch 3), **dadurch gekennzeichnet, dass** der zumindest eine ringförmige Träger mit dem zumindest einen zweiten Gewindeelement gekoppelt ist.

5. Vorrichtung nach Anspruch 4), **dadurch gekennzeichnet, dass** das zumindest eine ringförmige Trägerelement (15) derart mit dem zumindest einen zweiten Gewindeelement (4) gekoppelt ist, dass es axial entlang der zweiten Achse (10) gleiten kann und eine gegenseitige Drehung in Bezug auf die Achse (10) verhindert ist.

6. Vorrichtung nach Anspruch 5), **dadurch gekennzeichnet, dass** die gegenseitige Drehung zwischen dem Trägerelement (15) und dem zumindest einen zweiten Gewindeelement (4) durch Mittel verhindert ist, die zumindest eine Facette (18) oder Abflachung des Gewindes des zumindest einen zweiten Gewindeelements (4), die mit einem Abschnitt einer gegenwirkenden Oberfläche (20) des Trägerelements (15) zusammenwirkt, umfassen.

7. Vorrichtung nach Anspruch 5), **dadurch gekennzeichnet, dass** die gegenseitige Drehung zwischen dem Trägerelement (15) und dem zumindest einen zweiten Gewindeelement (4) durch Mittel, die Laschen- oder Zahnsysteme umfassen, oder durch elastische Mittel verhindert ist.

8. Vorrichtung nach einem der Ansprüche 1) bis 7), **dadurch gekennzeichnet, dass** das zumindest eine Trägerelement (15) mit dem zumindest einen zweiten Gewindeelement (4) koaxial ist.

9. Vorrichtung nach Anspruch 1) oder 2), **dadurch gekennzeichnet, dass** das zumindest eine ringförmige Element (13) im Inneren des zumindest einen ringförmigen Trägers (15) angebracht ist.

10. Vorrichtung nach Anspruch 9), **dadurch gekennzeichnet, dass** das zumindest eine ringförmige Element (13) einstückig mit dem zumindest einen ersten Gewindeelement (3) ist.

11. Vorrichtung nach Anspruch 9) oder 10), **dadurch gekennzeichnet, dass** das zumindest eine Trägerelement (15) mit dem zumindest einen ersten Gewindeelement (3) koaxial ist.

12. Vorrichtung nach einem der Ansprüche 1) bis 11), **dadurch gekennzeichnet, dass** das zumindest eine ringförmige Element (13) dazu geeignet ist, durch Reibung mit zumindest einem Abschnitt einer Oberfläche (16), die einstückig mit dem zumindest einen ersten Gewindeelement (3) oder dem zumindest einen zweiten Gewindeelement (4) ist, zusammenzuwirken.

13. Vorrichtung (100) nach einem der Ansprüche 1) bis 12), **dadurch gekennzeichnet, dass** das zumindest eine ringförmige Trägerelement (15a) offen ist.

14. Vorrichtung nach einem der Ansprüche 1) bis 13), **dadurch gekennzeichnet, dass** der Durchmesser des zumindest einen Trägerelements (15) derart ist, dass es in das zumindest eine zweite Gewindeelement (8a) eingreift.

15. Vorrichtung nach einem der Ansprüche 1) bis 14), **dadurch gekennzeichnet, dass** das zumindest eine Trägerelement (15) ein oder mehrere bevorzugte Nachgebebereiche aufweist.

16. Vorrichtung (600) nach einem der Ansprüche 1) bis 12), **dadurch gekennzeichnet, dass** das Trägerelement (15f) mehrere verschiedene Elemente (40, 41) umfasst, von denen jedes im Wesentlichen einen Teil eines Kreisausschnitts definiert.

17. Vorrichtung nach einem der Ansprüche 1) bis 16), **dadurch gekennzeichnet, dass** das ringförmige Element (13) aus einem verschleißfesten Material hergestellt ist, das vorzugsweise ein elastisches Material umfasst.

18. Vorrichtung nach Anspruch 17), **dadurch gekennzeichnet, dass** das zumindest eine ringförmige Element (13) einen elastischen Ring umfasst, der vorzugsweise aus zumindest einem O-Ring besteht.

19. Vorrichtung (400, 500) nach einem der Ansprüche 1) bis 18), **dadurch gekennzeichnet, dass** sie ferner Mittel zum Einstellen der Reibungskraft, die von den Mitteln (12) entwickelt wird, umfasst.

20. Vorrichtung (400, 500) nach Anspruch 19), **dadurch gekennzeichnet, dass** die Mittel zum Einstellen der Reibungskraft, die von den Mitteln (12) entwickelt wird, einen Stift umfassen, der zwischen dem zumindest einen ringförmigen Element (13) und dem zumindest einen zweiten Gewindeelement (4) oder dem zumindest einen ersten Gewindeelement (3) eingeführt ist.

21. Vorrichtung nach einem der vorangegangenen Ansprüche, **dadurch gekennzeichnet, dass** das zumindest eine erste Gewindeelement (3) eine Schraubenmutter (5, 5a, 5b, 5c, 5d, 5e, 5f, 5g, 5h, 5i) und das zumindest eine zweite Gewindeelement (4) eine Schraube (8, 8a, 8b, 8c, 8d, 8e, 8f, 8g, 8h) ist.

22. Vorrichtung nach einem der Ansprüche 1) bis 21), **dadurch gekennzeichnet, dass** das zumindest eine erste Gewindeelement (3) eine Schraube (8, 8a, 8b, 8c, 8d, 8e, 8f, 8g, 8h) und das zumindest eine zweite Gewindeelement (4) eine Schraubenmutter (5, 5a, 5b, 5c, 5d, 5e, 5f, 5g, 5h, 5i) ist.

23. Vorrichtung (1, 100, 200, 300, 400, 500, 600, 700) nach einem der vorangegangenen Ansprüche, **dadurch gekennzeichnet, dass** sie ferner einen Träger (2) umfasst, an dem das zumindest eine erste Gewindeelement (3) und/oder das zumindest eine zweite Gewindeelement (4) mittels Lager (11, 11 a, 6) drehbar installiert sind.

24. Vorrichtung nach Anspruch 1) und 23), **dadurch gekennzeichnet, dass** das Trägerelement (15) in einem Sitz (17) aufgenommen ist, der durch eine erste gegenwirkende Oberfläche (21), die zu zumindest einem der Gewindeelemente (3, 4) gehört oder einstückig mit dem Innenring von einem der Lager (11, 11a) ist, und durch eine zweite gegenwirkende Oberfläche (22), die einstückig mit dem Innenring von einem der Lager (11, 11a) ist, definiert ist.

25. Vorrichtung (1, 100, 200, 300, 400, 500, 600, 700) nach einem der vorangegangenen Ansprüche, **dadurch gekennzeichnet, dass** die Gewinde der Gewindeelemente ein- oder mehrgängig sind.

26. Vorrichtung (1, 100, 200, 300, 400, 500, 600, 700) nach einem der vorangegangenen Ansprüche, **dadurch gekennzeichnet, dass** die Durchmesser der Gewindeelemente verschieden sind und ihr Verhältnis vorzugsweise zwischen 0,3 und 0,9 enthalten ist.

27. Vorrichtung (1, 100, 200, 300, 400, 500, 600, 700) nach einem der vorangegangenen Ansprüche, **dadurch gekennzeichnet, dass** sie Antriebsmittel umfasst, die dazu geeignet sind, das zumindest eine erste Gewindeelement (3) oder das zumindest eine zweite Gewindeelement (4) in Drehung zu versetzen, um ihre gegenseitige relative axiale Translation zu bestimmen.

## Revendications

1. Dispositif (1, 100, 200, 300, 400, 500, 600, 700) pour la conversion d'un mouvement rotatif en un mouvement linéaire, comprenant au moins un premier élément fileté (3) qui définit un premier axe (7), ledit premier élément fileté (3) étant accouplé avec au moins un deuxième élément fileté (4) définissant un deuxième axe (10), lesdits axes (7, 10) étant parallèles l'un par rapport à l'autre mais non coïncidants, ledit dispositif (1) comprenant également des moyens (12) positionnés entre ledit au moins un premier élément fileté (3) et ledit au moins un deuxième élément fileté (4), aptes à transmettre par frottement un mouvement rotatif accordé à un desdits éléments (3, 4) à l'autre, **caractérisé en ce que** lesdits moyens (12) comprennent au moins un élément annulaire (13) logé dans un siège annulaire (14) obtenu sur un support annulaire (15) assemblé sur ledit au moins un deuxième élément fileté (4).

2. Dispositif selon la revendication 1), **caractérisé en ce que** ledit au moins un élément annulaire (13) se compose d'un matériel élastique.

3. Dispositif selon la revendication 1) ou 2), **caractérisé en ce que** ledit au moins un élément annulaire (13) est assemblé à l'extérieur dudit au moins un support annulaire (15).

4. Dispositif selon la revendication 3), **caractérisé en ce que** ledit au moins un support annulaire est accouplé audit au moins un deuxième élément fileté.

5. Dispositif selon la revendication 4), **caractérisé en ce que** ledit au moins un élément de support annulaire (15) est accouplé audit au moins un deuxième élément fileté (4) de manière à lui permettre de coulisser axialement le long dudit deuxième axe (10) et à empêcher une rotation réciproque par rapport au même axe (10).

6. Dispositif selon la revendication 5), **caractérisé en ce que** la rotation réciproque entre ledit élément de support (15) et ledit au moins un deuxième élément fileté (4) est empêchée par des moyens comprenant au moins une facette (18) ou un aplanissement du filet dudit au moins un deuxième élément fileté (4) qui coopère avec une partie d'une surface de contraste (20) dudit élément de support (15).

7. Dispositif selon la revendication 5), **caractérisé en ce que** la rotation réciproque entre ledit élément de support (15) et ledit au moins un deuxième élément fileté (4) est empêchée par des moyens comprenant des systèmes à languette ou à dent ou par des moyens élastiques.

8. Dispositif selon l'une quelconque des revendications de 1) à 7), **caractérisé en ce que** ledit au moins un élément de support (15) est coaxial avec ledit au moins un deuxième élément fileté (4).

9. Dispositif selon la revendication 1) ou 2), **caractérisé en ce que** ledit au moins élément annulaire (13) est assemblé à l'intérieur dudit au moins un support annulaire (15).

10. Dispositif selon la revendication 9), **caractérisé en ce que** ledit au moins un élément annulaire (13) est solidaire dudit au moins un premier élément fileté (3).

11. Dispositif selon la revendication 9) ou 10), **caractérisé en ce que** ledit au moins un élément de support (15) est coaxial avec ledit au moins un premier élément fileté (3).

12. Dispositif selon l'une quelconque des revendications de 1) à 11), **caractérisé en ce que** ledit au moins un élément annulaire (13) est indiqué pour coopérer par frottement avec au moins une partie d'une surface (16) solidaire dudit au moins un premier élément fileté (3) ou dudit au moins un deuxième élément fileté (4).

13. Dispositif (100) selon l'une quelconque des revendications de 1) à 12), **caractérisé en ce que** ledit au moins un élément de support annulaire (15a) est ouvert.

14. Dispositif selon l'une quelconque des revendications de 1) à 13), **caractérisé en ce que** le diamètre dudit au moins un élément de support (15) est tel à interférer avec ledit au moins un deuxième élément fileté (8a).

15. Dispositif selon l'une quelconque des revendications de 1) à 14), **caractérisé en ce que** ledit au moins un élément de support (15) présente une ou plusieurs régions élastiques préférentielles.

16. Dispositif (600) selon l'une quelconque des revendications de 1) à 12), **caractérisé en ce que** ledit élément de support (15f) comprend plusieurs éléments différents (40, 41), chacun définissant essentiellement une partie d'un secteur circulaire.

17. Dispositif selon l'une quelconque des revendications de 1) à 16), **caractérisé en ce que** ledit élément annulaire (13) se compose d'un matériel résistant à l'eau, préférablement comprenant un matériel élastique.

18. Dispositif selon la revendication 17), **caractérisé en ce que** ledit au moins un élément annulaire (13) comprend un anneau élastique préférablement constitué d'au moins un joint torique.

19. Dispositif (400, 500) selon l'une quelconque des revendications de 1) à 18), **caractérisé en ce qu'**il comprend également des moyens pour le réglage de la force de frottement développée par lesdits moyens (12).

20. Dispositif (400, 500) selon la revendication 19), **caractérisé en ce que** lesdits moyens pour le réglage de la force de frottement développée par lesdits moyens (12) comprennent un pivot qui est inséré entre ledit au moins un élément annulaire (13) et ledit au moins un deuxième élément fileté (4) ou ledit au moins un premier élément fileté (3).

21. Dispositif selon l'une quelconque des revendications précédentes, **caractérisé en ce qu'**au moins un premier élément fileté (3) est une vis mère (5, 5a, 5b, 5c, 5d, 5e, 5f, 5g, 5h, 5i) et ledit au moins un deuxième élément (4) est une vis (8, 8a, 8b, 8c, 8d, 8e, 8f, 8g, 8h).

22. Dispositif selon l'une quelconque des revendications de 1) à 21), **caractérisé en ce que** ledit au moins un premier élément fileté (3) est une vis (8, 8a, 8b, 8c, 8d, 8e, 8f, 8g, 8h) et ledit au moins un deuxième élément fileté (4) est une vis mère (5, 5a, 5b, 5c, 5d, 5e, 5f, 5g, 5h, 5i).

23. Dispositif (1, 100, 200, 300, 400, 500, 600, 700) selon l'une quelconque des revendications précédentes, **caractérisé en ce qu'**il comprend également un support (2) sur lequel ledit au moins un premier élément fileté (3) et/ou ledit au moins un deuxième élément fileté (4) est installé de manière pivotante au moyen de roulements (11, 11a, 6).

24. Dispositif selon les revendications 1) et 23), **caractérisé en ce que** ledit élément de support (15) est logé dans un siège (17) défini par une première surface de contraste (21) appartenant à au moins un desdits éléments filetés (3, 4) ou solidaire de l'anneau interne d'un desdits roulements (11, 11a) et par une deuxième surface de contraste (22) solidaire de l'anneau interne d'un desdits roulements (11, 11a).

25. Dispositif (1, 100, 200, 300, 400, 500, 600, 700) selon l'une quelconque des revendications précédentes, **caractérisé en ce que** les filets desdits éléments filetés présentent un ou plusieurs débuts.

26. Dispositif (1, 100, 200, 300, 400, 500, 600, 700) selon l'une quelconque des revendications précédentes, **caractérisé en ce que** les diamètres desdits éléments filetés sont différents et leur rapport est préférablement compris entre 0,3 et 0,9.

27. Dispositif (1, 100, 200, 300, 400, 500, 600, 700) selon l'une quelconque des revendications précédentes, **caractérisé en ce qu'**il comprend également des moyens de puissance aptes à mettre en rotation ledit au moins un premier élément fileté (3) ou ledit au moins un deuxième élément fileté (4) de façon à déterminer une translation axiale relative réciproque.
